# EUROPÄISCHE PATENTANMELDUNG

(11) **EP 2 003 420 A2**
(43) Veröffentlichungstag der Anmeldung: **17.12.2008**
(21) Anmeldenummer: 08008500.4
(22) Anmeldetag: 06.05.2008
(51) Int. Cl.: G01C 21/34

(54) **Verfahren zum Betrieb eines Navigationssystems**

(30) Priorität: 13.06.2007 DE 102007027820; 14.08.2007 DE 102007038463
(71) Anmelder: Navigon AG, 20251 Hamburg (DE)
(72) Erfinder: Kahlow, Matthias, 97072 Würzburg (DE); Katzer, Jochen, 91605 Bergtshofen (DE)
(74) Vertreter: von den Steinen, Axel

(57) **Zusammenfassung**

Die Erfindung betrifft ein Verfahren zum Betrieb eines Navigationssystems, umfassend
- eine Datenbank, in der ein geographisches Gebiet durch maschinenlesbare Daten beschrieben ist, wobei die Datenbank auch Wegweiserdatensätze (08, 09, 10, 11, 12, 13) enthält, die jeweils die Wegweiserangaben (14) von Wegweisschildern in dem geographischen Gebiet beschreiben,
- eine Routenberechnungseinheit zur Berechnung einer Route (01),
- eine Positionsermittlungseinheit, mit der die aktuelle Position bestimmt werden kann,
- zumindest eine Ausgabeeinrichtung (27), mit der zumindest ein Teil eines Wegweiserdatensatzes (08, 09, 10, 11, 12, 13) abhängig von der aktuellen Position als optische und/oder akustische Wegweisermitteilung (21, 22, 23, 24, 25, 26) ausgegeben werden kann,
mit folgenden Verfahrensschritten:
a) Ermittlung von zumindest zwei Wegweiserdatensätzen (08, 09, 10, 11, 12, 13), wobei ein erster Wegweiserdatensatz die Wegweiserangaben eines auf der Route (01) liegenden ersten Wegweisschildes beschreibt, und wobei ein zweiter Wegweiserdatensatz die Wegweiserangaben eines auf der Route (01) hinter dem ersten Wegweisschild liegenden zweiten Wegweisschildes beschreibt,
b) Vergleich der ermittelten Wegweiserdatensätze (08, 09, 10, 11, 12, 13),
c) Ableitung der Wegweisermitteilung (21, 22, 23, 24, 25, 26), wobei der Inhalt der Wegweisermitteilung (21, 22, 23, 24, 25, 26) in Abhängigkeit vom Ergebnis des Vergleichs zwischen den ermittelten Wegweiserdatensätzen (08, 09, 10, 11, 12, 13) bestimmt wird,
d) optische und/oder akustische Ausgabe der Wegweisermitteilung (21, 22, 23, 24, 25, 26).

## Beschreibung

Die Erfindung betrifft ein Verfahren zum Betrieb eines Navigationssystems, das beispielsweise in der Art eines mobilen Navigationsgerätes ausgebildet sein kann. Das Navigationssystem umfasst dabei eine Datenbank, in der ein bestimmtes geografisches Gebiet durch maschinenlesbare Daten beschrieben ist. Dabei kann es sich beispielsweise um das Straßennetz von Deutschland, Europa oder einer anderen geografischen Einheit handeln. Bestandteil dieser Datenbank sind dabei insbesondere auch Wegweiserdatensätze. In diesen Wegweiserdatensätzen sind Informationen gespeichert, die auf Wegweiserschildern bzw. Hinweisschildern angegeben sind. Diese Informationen sollen nachfolgend ganz allgemein als Wegweiserangaben bezeichnet werden. Die entsprechenden Informationen von den Wegweiserschildern werden üblicherweise von den Anbietern digitalen Kartenmaterials in die digitalen Karten integriert, so dass die Informationen auf den Hinweisschildern positionsbezogen ausgegeben werden können.

Daneben umfasst das Navigationssystem in üblicher Weise eine Routenberechnungseinheit zur Berechnung einer Route, eine Positionsermittlungseinheit zur Bestimmung der eigenen aktuellen Position und eine Ausgabeeinrichtung, mit der Informationen an den Benutzer ausgegeben werden können. Die Ausgabe kann dabei in optischer Weise, beispielsweise durch Verwendung eines Bildschirms, oder in akustischer Weise, beispielsweise durch Verwendung eines Lautsprechers, ausgegeben werden. Die Ausgabeeinrichtung ist dabei insbesondere dafür geeignet Teile des Wegweiserdatensatzes auszugeben, um die Orientierung des Benutzers durch die entsprechenden Angaben zu unterstützen.

Die DE 20 2005 014 631 U1 beschreibt ein Navigationsgerät, bei dem Wegweisermitteilungen, die aus den Wegweiserangaben der gespeicherten Wegweiserdatensätze abgeleitet sind, angezeigt werden. Ein Problem der Ausgabe dieser Wegweisermitteilungen stellt es dabei dar, wenn in einem Wegweiserdatensatz mehrere Wegweiserangaben enthalten sind. Dies ist beispielsweise der Fall, wenn auf dem zugeordneten Wegweiserschild zwei, drei und mehrere Zielorte angeschrieben sind.

Enthält der Wegweiserdatensatz mehrere Wegweiserangaben, so gibt es für die Ableitung der Wegweisermitteilung bisher zwei unterschiedliche Lösungsansätze. Gemäß dem ersten Lösungsansatz wird immer die im Wegweiserdatensatz an erster Stelle stehende Wegweiserangabe ausgegeben. Dadurch ist gewährleistet, dass die Wegweisermitteilung kurz gehalten ist. Aus Sicht der Verständlichkeit der Wegweisermitteilungen ist dieser Ansatz jedoch nachteilig, da die Auswahl der Wegweiserangabe letztendlich zufällig abläuft, so dass sich die Wegweisermitteilungen entlang der Route ständig ändern können. Außerdem ist durch die zufällige Auswahl der auszugebenden Wegweiserangaben nicht gewährleistet, dass die für die Orientierung auf der Route wichtigen Informationen auf den Wegweiserschildern ausgegeben werden. Diese wichtigen Informationen, beispielsweise die Angabe des Zielortes der Route oder die Angabe einer großen Stadt in der Nähe des Zielortes, kann durch die zufällige Auswahl der Wegweiserangaben unterdrückt sein, obwohl diese Angaben, die für den Benutzer für die Orientierung auf der Route gerade besonders wichtig sind, im entsprechenden Wegweiserdatensatz enthalten sind.

Gemäß einem zweiten Lösungsansatz werden immer alle Wegweiserangaben eines Wegweiserdatensatzes angezeigt. Auch dies ist für die Orientierung des Benutzers nachteilig, da die wichtigen Informationen mit einer Vielzahl von unwichtigen Informationen vermischt ausgegeben werden und dadurch die intuitive Erkennbarkeit verschlechtert wird. Während der Fahrt hat der Benutzer nur wenig Zeit, die angezeigten Wegweisermitteilungen aufzunehmen und gegebenenfalls mit der realen Beschilderung auf den Wegweiserschildern zu vergleichen. Darüber hinaus erfordert die Ausgabe aller Wegweiserangaben eines Wegweiserdatensatzes viel Raum an einer Anzeigeeinrichtung, beispielsweise einen Bildschirm bzw. viel Zeit bei der akustischen Ansage. Die Ausgabe anderer wichtiger Informationen an den Benutzer kann dadurch beeinträchtigt werden.

Ausgehend von diesem Stand der Technik ist es deshalb Aufgabe der vorliegenden Erfindung, ein neues Verfahren zum Betrieb eines Navigationssystems vorzuschlagen, mit dem die Ableitung und Anzeige von Wegweisermitteilungen verbessert wird. Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass bei der Generierung einer Wegweisermitteilung nicht nur ein, insbesondere der aktuellen Position zugeordneter, Wegweiserdatensatz ausgewertet wird, sondern mehrere Wegweiserdatensätze Berücksichtigung finden. Die berücksichtigten Wegweiserdatensätze sind dabei jeweils Wegweiserschildern zugeordnet, die alle auf der vorberechneten Route des Benutzers liegen. Durch diese Berücksichtigung mehrerer Wegweiserdatensätze ist es möglich, eine vorausschauende Betrachtung der einzelnen Wegweiserangaben durch Vergleich der verschiedenen Wegweiserdatensätze durchzuführen. Durch diesen Vergleich ist es möglich, Wegweiserangaben, die für die Einhaltung der Route von hohem Informationsgehalt sind, mit hoher Priorität anzuzeigen, wohingegen Wegweiserangaben mit geringem oder keinem Informationsgehalt für die Einhaltung der Route abgefiltert werden.

Bei Durchführung des erfindungsgemäßen Verfahrens werden deshalb zumindest zwei Wegweiserdatensätze, die jeweils Wegweiserschildern auf der Route zugeordnet sind, ermittelt. Die Wegweiserangaben in den ermittelten Wegweiserdatensätzen werden verglichen, um insbesondere Übereinstimmungen in den Wegweiserangaben der verschiedenen Wegweiserdatensätzen festzustellen. Dieser Vergleich von mehreren der Route zugeordneten Wegweiserdatensätzen bedeutet mit anderen Worten, dass in einer vorausschauenden Betrachtung die Informationen der verschiedenen Wegweiserschilder miteinander in Beziehung gebracht werden.

Der Vergleich der Wegweiserangaben der Wegweisschilder kann dabei entweder vom Start der Route oder vom Ziel der Route aus anfangend vorgenommen werden. Werden die Wegweiserangaben vom Ziel der Route aus anfangend analysiert, ist es vorteilhaft, dass auf diese Weise das Ziel der Route bzw. eine in der Nähe des Ziels liegende, in den Wegweiserangaben auftauchende Stadt so früh wie möglich ausgegeben wird. Da der Benutzer das Ziel seiner Reise höchstwahrscheinlich kennt, nicht aber unbedingt auf der Strecke befindliche Zwischenziele, ist das ein erwünschter Effekt.

Ausgangspunkt bei der Ableitung der aktuellen Wegweisermitteilung sind im Normalfall die Wegweiserangaben, die auf dem relativ zur aktuellen Position nächstliegenden Wegweiserschild angeschrieben sind. Die Wegweiserangaben dieses ersten Wegweiserschildes werden aber nicht alle angezeigt, oder es wird zufällig eine Wegweiserangabe selektiert. Vielmehr werden erfindungsgemäß eine oder mehrere Wegweiserangaben aus der Menge der Wegweiserangaben des ersten Wegweiserschildes in Abhängigkeit vom Vergleichsergebnis zwischen den ermittelten Wegweiserdatensätzen ausgewählt. Die Auswahl der auszugebenden Wegweiserangaben erfolgt also nicht mehr rein zufällig, beispielsweise durch Festlegung eines bestimmten Platzes im Wegweiserdatensatz, sondern wird durch das Vergleichsergebnis der vorausschauenden Betrachtung der auf der Route liegenden Wegweiserschilder bestimmt und beeinflusst.

Zuletzt wird die Wegweisermitteilung dann in der erfindungsgemäß aufbereiteten Form optisch bzw. akustisch ausgegeben.

Im Normalbetrieb des Navigationssystems sollte der erste Wegweiserdatensatz dem Wegweiserschild zugeordnet sein, das auf der Route liegend relativ zur aktuellen Position nächstliegend ist. Die auf diesem nächstliegenden Wegweiserschild enthaltenen Wegweiserangaben sind dem Benutzer üblicherweise beim Passieren des Wegweiserschilds zumindest teilweise anzuzeigen, um dem Benutzer einen Vergleich der Routenangaben des Navigationssystems mit den Wegweiserangaben der an der Straße angebrachten Wegweiserschilder zu ermöglichen.

Die erfindungsgemäße Vorausschau von auf der Route liegenden Wegweiserschildern zur Ableitung der Wegweisermitteilung sollte bevorzugt eine ununterbrochene Kette von auf der Route liegenden Wegweiserschildern in Betracht ziehen. Dies bedeutet mit anderen Worten, dass neben dem auf der Route nächstliegenden Wegweiserschild darüber hinaus die Wegweiserdatensätze ausgewertet werden sollten, die nach dem nächstliegenden Wegweiserschild an zweiter, dritter, vierter Stelle und in ununterbrochener Folge weitergehend auf der Route liegen. Es ist dabei insbesondere denkbar, dass bei der Ableitung der Wegweisermitteilungen jeweils alle Wegweiserdatensätze ausgewertet werden, die Wegweiserschildern auf der noch verbleibenden Route zugeordnet sind.

In welcher Weise die Auswertung des Vergleichsergebnisses zwischen den verschiedenen Wegweiserdatensätzen erfolgt, ist grundsätzlich beliebig. Eine besonders einfach durchzuführende Variante ergibt sich, wenn in den Wegweiserangaben der miteinander zu vergleichenden Wegweiserdatensätzen jeweils nach Übereinstimmungen gesucht wird. Alle Wegweiserangaben eines Wegweiserdatensatzes, die keine Übereinstimmungen in einem nachfolgenden Wegweiserdatensatz aufweisen, werden dabei ausgefiltert. Nur die nach der Ausfilterung verbleibenden Wegweiserangaben werden anschließend für die Ableitung der Wegweisermitteilung berücksichtigt. Diese Art der Auswertung ermöglicht Wegweisermitteilungen, mit denen sich der Benutzer schon früh in eine bestimmte Richtung orientieren kann. Bei Fahrmanövern, zu denen Wegweisermitteilungen gegeben werden, erhält der Benutzer möglichst lange die jeweils selben Wegweiserangaben. Dadurch wird verhindert, dass sich der Benutzer bei jedem Fahrmanöver in eine neue Richtung entsprechend sich ändernder Wegweiserangaben orientieren muss. Dadurch wird die subjektive Sicherheit des Benutzers, dass er sich in die richtige Richtung fortbewegt, erhöht. Außerdem entspricht diese Art der Aufbereitung der Wegweisermitteilungen den vom Benutzer intuitiv erwarteten Informationen. Denn der Benutzer kennt seinen Zielort bzw. üblicherweise nahe dem Zielort befindliche größere Orte und richtet sich möglichst früh nach Wegweisern, die diesen Zielort bzw. nahe liegende größere Orte angeben.

Sollen mehr als zwei Wegweiserdatensätze miteinander verglichen und bei der Ableitung der Wegweisermitteilung in Betracht gezogen werden, ist die Verwendung einer Vergleichsergebnisliste sinnvoll. In die Vergleichsergebnisliste werden im ersten Schritt alle Wegweiserangaben des ersten Wegweiserdatensatzes eingeschrieben, die beim Vergleich mit dem zweiten Wegweiserdatensatz nicht abgefiltert wurden. Anschließend wird der Inhalt der Vergleichsergebnisliste mit den Wegweiserangaben des dritten Wegweiserdatensatzes verglichen, und Wegweiserangaben ohne Übereinstimmung werden wiederum abgefiltert. Diese stufenweise Abfilterung von Wegweiserangaben aus der Vergleichsergebnisliste wird dabei so lange fortgeführt, bis keine übereinstimmenden Wegweiserangaben mehr vorhanden sind bzw. bis keine weiteren Wegweiserdatensätze mehr für die Route vorliegen. Die letzte, nicht leere Vergleichsergebnisliste enthält dabei also die Wegweiserangaben, die entlang einer bestimmten Wegstrecke gleich lautend auf den Wegweisern angegeben sind. Diese gleich lautenden Wegweiserangaben sind für den Benutzer für seine Orientierung von besonders großer Bedeutung und dienen deshalb zur Generierung der Wegweisermitteilung.

Enthält die Vergleichsergebnisliste nach Beendigung des Abfilterungsprozesses nur eine Wegweiserangabe, wird jeweils diese Wegweiserangabe, die letztendlich an mehreren Wegweiserschildern nacheinander angezeigt wurde, als Wegweisermitteilung ausgegeben. Enthält die Vergleichsergebnisliste dagegen mehrere Wegweiserangaben, ergeben sich für die Generierung der Wegweisermitteilung wiederum zwei unterschiedliche Verfahrensvarianten. Gemäß der ersten Verfahrensvariante werden alle in der Vergleichsergebnisliste verbliebenen Wegweiserangaben nebeneinander ausgegeben.

Alternativ dazu kann für den Fall von mehreren in der Vergleichsergebnisliste enthaltenen Wegweiserangaben immer nur eine dieser Wegweiserangaben selektiert und ausgegeben werden. Beispielsweise ist es denkbar, dass immer jeweils die erste Wegweiserangabe aus der Vergleichsergebnisliste selektiert und als Wegweisermitteilung ausgegeben wird.

Soweit die Vergleichsergebnisliste durch stufenweise Fortsetzung des Vergleichs mit immer weiteren Wegweiserdatensätzen vollständig entleert wurde, bedeutet dies, dass an dieser Stelle dann keine Wegweiserangabe mehr vorhanden ist, die eine Übereinstimmung mit vorhergehenden Wegweiserangaben aufweist. Für diesen Fall ist dann eine neue Vergleichsergebnisliste durch Vergleich weiterer auf der Route liegenden Wegweiserdatensätzen vorzunehmen. Die mit der Wegweisermitteilung ausgegebene Wegweiserangabe ändert sich an dieser Stelle dann zwingend.

Eine besonders gute Orientierung des Benutzers wird durch Angabe des Zielortes erreicht. Nach einer bevorzugten Verfahrensvariante ist es deshalb vorgesehen, dass alle Wegweiserdatensätze jeweils darauf überprüft werden, ob der Zielort der vorberechneten Route als Wegweiserangabe enthalten ist. Soweit dies der Fall ist, wird der Zielort, den der Benutzer zu Beginn des Routenberechnungsverfahrens über eine Eingabeeinrichtung eingegeben hat, als Wegweisermitteilung ausgegeben.

Wird beim Vergleich der Wegweiserangaben verschiedener Wegweiserdatensätze nach Übereinstimmungen gesucht, sind unterschiedliche Suchstrategien zur Klassifizierung von Übereinstimmungen denkbar. Eine besonders sichere Methode ergibt sich, wenn in den Wegweiserdatensätzen jeweils nach Wegweiserangaben mit zumindest einem identischen Wort, zumindest einem identischen Wortbestandteil, zumindest einer identischen Wortgruppe und/oder zumindest einem identischen Graphiksymbol gesucht wird. Wird ein entsprechend identischer Bestandteil gefunden, sollen die beiden Wegweiserangaben als übereinstimmend klassifiziert und dann beispielsweise in die Vergleichsergebnisliste übernommen werden.

Abhängig von der jeweiligen Landessprache können Ortsangaben vielfach auch Hilfsworte enthalten, die keine signifikante Charakterisierung des Ortsnamens zulassen. Es ist deshalb besonders vorteilhaft, wenn entsprechende Hilfsworte beim Vergleich der Wegweiserangaben zur Feststellung von Übereinstimmung unberücksichtigt bleiben. Dazu können beispielsweise in einer Datenbank Hilfswortlisten hinterlegt werden. Die in der Hilfswortliste enthaltenen Hilfsworte werden dann bei einem Vergleich von Wegweiserdatensätzen aus den Wegweiserangaben abgefiltert, um die Klassifizierung von Übereinstimmungen durch Auffinden gleicher Hilfsworte zu verhindern.

In der Grundvariante des Verfahrens werden üblicherweise Übereinstimmungen in den alphanumerisch gespeicherten Wegweiserangaben gesucht, wie sie denjenigen auf den Wegweiserschildern entsprechen.

Übereinstimmungen werden dabei unter Umständen nicht gefunden, da es häufig vorkommt, dass Ortsnamen auf Wegweisern abgekürzt werden. Abkürzungen von Ortsnamen können sich dabei auch auf aufeinander folgenden Wegweisern unterscheiden, je nachdem, wie viel Platz auf einem Wegweiser ist. Zwar lassen sich solche Fälle unter Umständen noch abfangen, indem man, wie oben beschrieben, auch Teile der Ortsnamen zum Vergleich zulässt. Unterschreiten die abgekürzten Ortsnamen aber eine gewisse Mindestlänge, beispielsweise etwa 5 Buchstaben, ist auch diese zusätzliche Vergleichsmöglichkeit nicht mehr sinnvoll. Somit ist es nicht immer möglich, dem Benutzer eine durchgehende Kette hinreichend ähnlicher Wegweisertexte zu präsentieren, obwohl die Informationen dem Grunde nach vorhanden sind. Dadurch ist er dazu gezwungen, sich häufiger anhand neuer Ziele zu orientieren. Zur Lösung dieses Problems kann so vorgegangen werden , dass zwei Wegweiserdatensätze dann als übereinstimmend klassifiziert werden, wenn beide Wegweiserdatensätze übereinstimmende Metadaten enthalten. Die Metadaten sind dabei aus den Wegweiserangaben abgeleitete Daten.

Insbesondere vorteilhaft beim Vergleich der Metadaten zweier Wegweiserdatensätze ist es, wenn die in den Wegweiserdatensätzen gespeicherten phonetischen Transkriptionen der Wegweiserangaben verglichen werden. Dadurch, dass auf Schildern abgekürzte Ortsnamen in den Metadaten, insbesondere den phonetischen Transkriptionen vollständig abgebildet sind, können mehr Übereinstimmungen zwischen den Zielangaben zweier Hinweisschilder gefunden werden.

Außerdem verringert sich in vielen Fällen die benötigte Zeit zum Vergleich der Hinweisschilder auf der Route. Dadurch, dass die Metadaten keine Informationen weglassen, sondern unter Umständen in der Realität fehlende Informationen rekonstruieren, werden deutlich weniger Vergleiche von Zeichenketten oder deren Teilen benötigt.

Zu welchem Zeitpunkt die Wegweisermitteilungen aufbereitet werden, ist grundsätzlich beliebig. Nach einer ersten Verfahrensvariante werden die Wegweisermitteilungen bereits vor Start der eigentlichen Routenführung für die gesamte Route aufbereitet und zwischengespeichert. Die zwischengespeicherten Wegweisermitteilungen werden dann während der Routenführung aus dem Zwischenspeicher abgerufen und positionsabhängig ausgegeben. Nach der Ausgabe einer Wegweisermitteilung kann diese dann aus dem Zwischenspeicher gelöscht werden. Diese Art der Aufbereitung der Wegweisermitteilungen entlastet die Prozessoreinheit des Navigationssystems während der eigentlichen Routenführung von Berechnungsprozessen zur Generierung der Wegweisermitteilungen. Allerdings muss zusätzlicher Speicherplatz zur Ablegung der vorab aufbereiteten Wegweisermitteilungen zur Verfügung gestellt werden.

Alternativ zu dieser Vorabgenerierung der Wegweisermitteilungen können die Wegweisermitteilungen auch positionsabhängig, insbesondere in Bezug auf einzelne Manöveranweisungen, in Echtzeit generiert werden. Dadurch wird Speicherplatz eingespart.

Soweit die Wegweisermitteilung für den Benutzer optisch angezeigt wird, sollte die grafische Gestaltung der Wegweisermitteilung, insbesondere die Farbgebung, auf die grafische Gestaltung des an der aktuellen Position vorhandenen Wegweiserschilds abgestimmt sein. Dazu kann beispielsweise ausgewertet werden, ob das Wegweiserschild auf einer Autobahn bzw. auf einer Bundesstraße steht. Wegweiserschilder an diesen beiden Straßentypen weisen charakteristische Farbgebungen (Autobahn blau/weiß, Bundesstraßen gelb/schwarz) auf. Die entsprechende grafische Gestaltung der Wegweisermitteilung kann daraufhin abgestimmt sein, um dem Benutzer einen intuitiven Eindruck des Wegweisers zu geben. Farbe und/oder Form der Wegweisermitteilung ist dabei auch auf unterschiedliche Länder abzustimmen, da in unterschiedlichen Staaten unterschiedliche Wegweiserschildgestaltungen üblich sind. Bei grenzüberschreitenden Routen ist die Position des Fahrzeugs auszuwerten und für das Land, in dem sich das Fahrzeug befindet, die Farbkonfiguration auszuwählen.

Verschiedene Aspekte der Erfindung sind in den Zeichnungen schematisch dargestellt und werden nachfolgend beispielhaft erläutert.

Es zeigen:
- Fig. 1: eine schematisierte Route eines Navigationssystems mit sechs Wegweiserdatensätzen, die sechs Wegweiserschildern auf der Route zugeordnet sind;
- Fig. 2: die für die Ausgabe der Wegweisermitteilungen auf der Route gemäß Fig. 1 selektierten Wegweiserangaben gemäß dem vorbekannten Stand der Technik;
- Fig. 3: die für die Ausgabe der Wegweisermitteilungen auf der Route gemäß Fig. 1 selektierten Wegweiserangaben gemäß dem erfindungsgemäßen Verfahren;
- Fig. 4: die Anzeige der ersten Wegweisermitteilung gemäß Fig. 3 an einer Anzeigeeinrichtung;
- Fig. 5: die Anzeige der zweiten Wegweisermitteilung gemäß Fig. 3 an einer Anzeigeeinrichtung;
- Fig. 6: die Anzeige der dritten Wegweisermitteilung gemäß Fig. 3 an einer Anzeigeeinrichtung;
- Fig. 7: die Anzeige der vierten Wegweisermitteilung gemäß Fig. 3 an einer Anzeigeeinrichtung;
- Fig. 8: die Anzeige der fünften Wegweisermitteilung gemäß Fig. 3 an einer Anzeigeeinrichtung;
- Fig. 9: die Anzeige der sechsten Wegweisermitteilung gemäß Fig. 3 an einer Anzeigeeinrichtung;
- Fig. 10: eine alternative Ausführungsform einer zweiten Wegweisermitteilung gemäß Fig. 3 an einer Anzeigeeinrichtung.

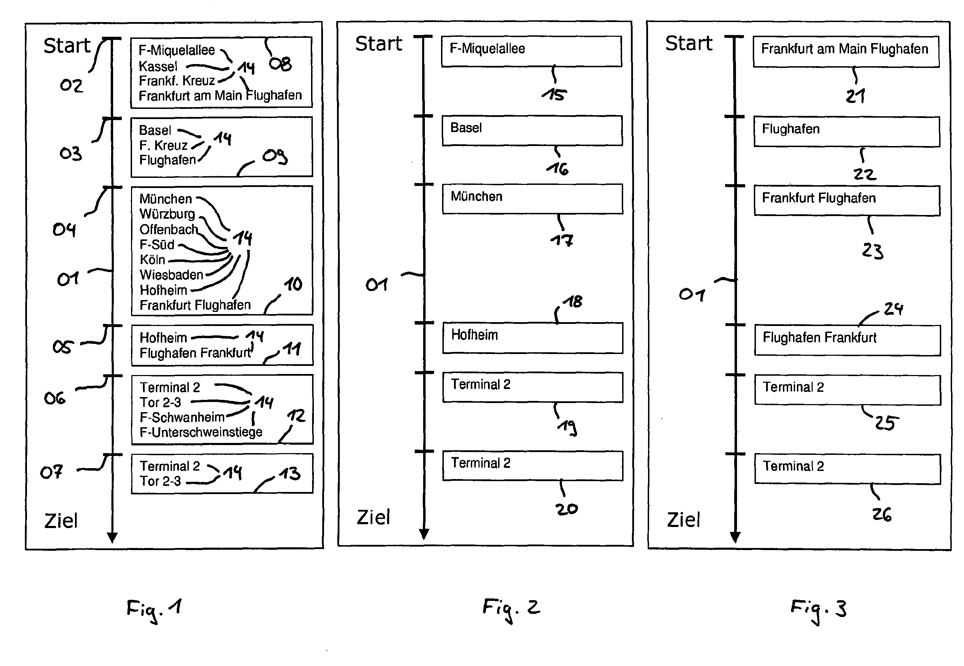

In Fig. 1 ist eine von einem Navigationssystem errechnete Route 01 symbolisch als Bewegungspfeil vom Start zum Ziel dargestellt. Auf der Route 01 sind dabei sechs Wegweiserschilder 02 bis 07 vorhanden. Die Angaben auf den Wegweiserschildern 02 bis 07 sind in einer Datenbank des Navigationssystems in Form von Wegweiserdatensätzen gespeichert. Die den Wegweiserschildern 02 bis 07 zugeordneten Wegweiserdatensätze 08 bis 13 sind in Fig. 1 den Wegweiserschildern benachbart zugeordnet. Jeder Wegweiserdatensatz 08 umfasst mehrere Wegweiserangaben 14, die in Textform die Zielangaben auf den Wegweiserschildern 02 bis 07 beschreiben. Alternativ zu dieser Textform können auch grafische Symbole als Wegweiserangaben vorhanden sein.

Fig. 2 stellt die Generierung von Wegweisermitteilungen 15 bis 20, die dem Benutzer entlang der Route 01 an einer Anzeigeeinrichtung des Navigationssystems angezeigt bzw. angesagt werden, schematisch dar. Man erkennt, dass aus den Wegweiserdatensätzen 08 jeweils die in der Liste zuerst stehenden Wegweiserangaben übernommen und als Wegweisermitteilungen 15 bis 20 beim Passieren der Wegweiserschilder 02 bis 07 angezeigt werden. Aus dem Beispiel ist offensichtlich, dass diese Art der Generierung von Wegweisermitteilungen für den Benutzer verwirrend und irritierend ist, da er sich beispielsweise an den Wegweiserschildern 03 und 04 abwechselnd in Richtung Basel bzw. in Richtung München orientieren muss, obwohl er entlang der Route 01 von einem Punkt in der Frankfurter Innenstadt in Richtung Frankfurt Flughafen navigiert.

Fig. 3 stellt schematisch die Generierung von Wegweisermitteilungen 21 bis 26 gemäß dem erfindungsgemäßen Verfahren dar. Die Wegweisermitteilungen 21 bis 26 werden dem Benutzer wiederum beim Passieren der Wegweiserschilder 02 bis 07 entlang der Route 01 angezeigt bzw. angesagt. Durch die erfindungsgemäße Analyse aller Wegweiserdatensätze 08 bis 13 und dem dabei vorgesehenen Vergleich der jeweils enthaltenen Wegweiserangaben wird erkannt, dass an den Wegweiserschildern 02 bis 05 jeweils der Flughafen als gemeinsames Ziel angegeben ist. Das Ziel Frankfurter Kreuz dagegen taucht nur zweimal auf und alle anderen Zielangaben 14 an den Wegweiserschildern 02 bis 05 sind jeweils nur einmal enthalten.

Aufgrund dieser Analyse wird beim Passieren der Wegweiserschilder 02 bis 05 jeweils die Wegweiserangabe 14 mit dem Wortbestandteil "Flughafen" der an allen vier Wegweiserschildern als übereinstimmend festgestellt wurde, ausgegeben.

Am Wegweiserschild 06 ist erstmals die Angabe "Flughafen" nicht mehr enthalten. Die Vergleichsergebnisliste ist somit an dieser Stelle durch Abfilterung aller keine Übereinstimmung aufweisenden Wegweiserangaben vollständig entleert. Aus diesem Grund werden dann die Wegweiserangaben der Wegweiserdatensätze 12 und 13 miteinander verglichen und dadurch die Wegweiserangabe "Terminal 2" als übereinstimmend klassifiziert. Da es sich um die einzige Wegweiserangabe 14 mit Übereinstimmung in beiden Wegweiserdatensätzen 19 und 20 handelt, wird dieser Auszug als Wegweiserangabe 25 und 26 beim Passieren der Wegweiserschilder 06 und 07 auf der Route 01 angezeigt.

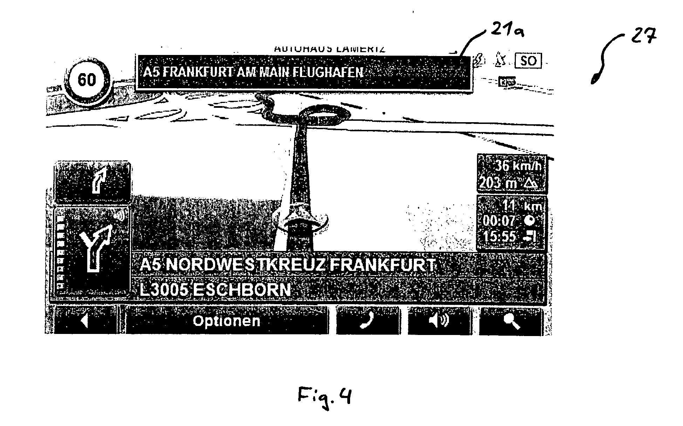

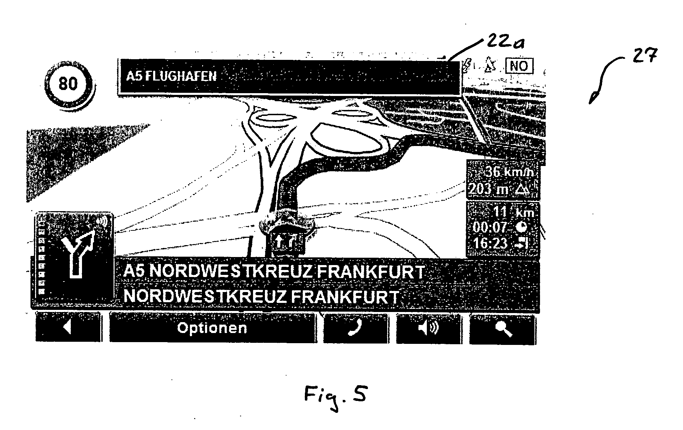

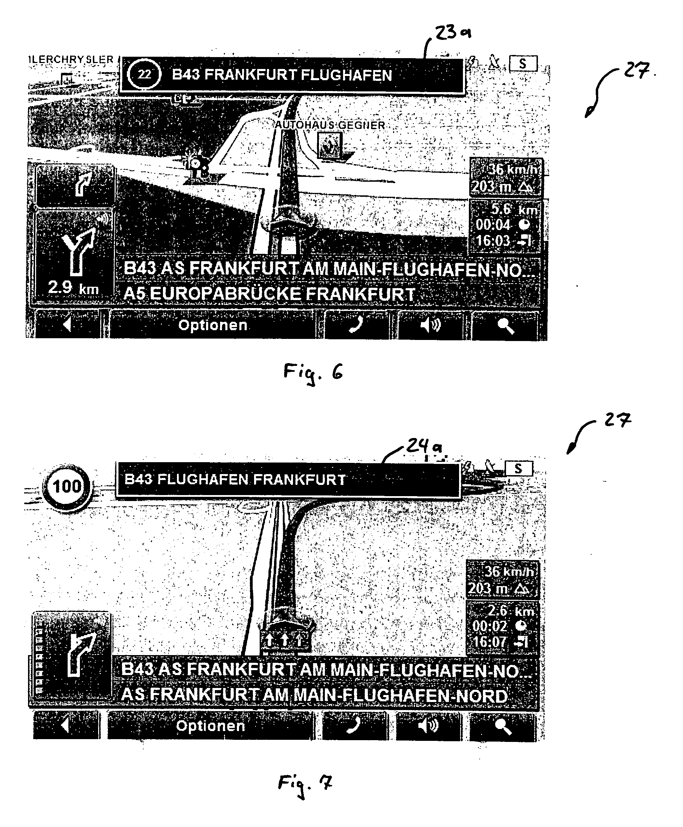

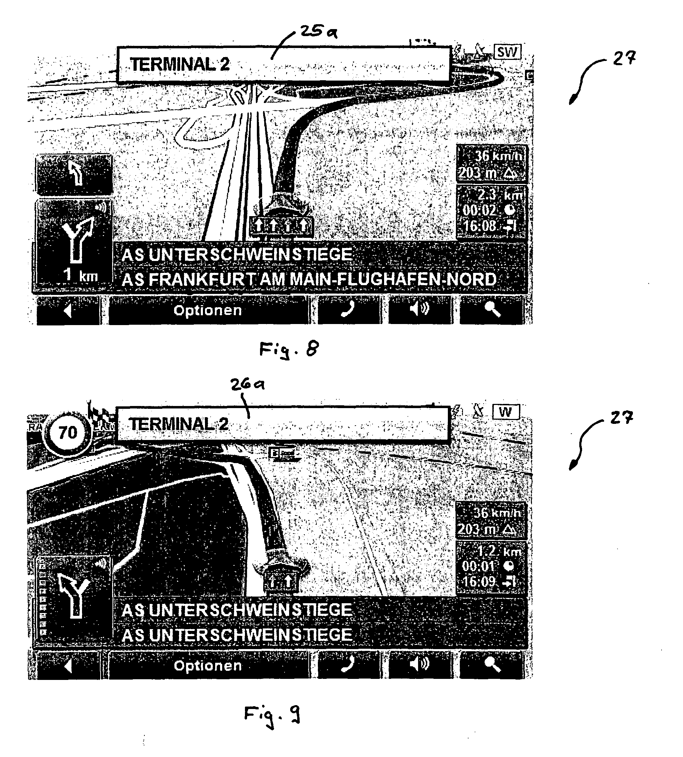

Fig. 4 bis Fig. 9 zeigen jeweils den Bildinhalt einer Anzeigeeinrichtung 27 eines Navigationssystems, beispielsweise eines mobilen Navigationsgeräts, beim Passieren der Wegweiserschilder 02 bis 07. Am oberen Rand der Anzeigeeinrichtung 27 wird dabei jeweils die Wegweisermitteilung als Graphik 21 a bis 26a mit dem entsprechenden Textinhalt der aus den Wegweiserdatensätzen 08 bis 13 selektierten Wegweiserangaben 14 angezeigt. Die Wegweiserangaben 14 werden dabei begleitet durch die entsprechende Straßennummer der Straßen, die mit dem nächsten Manöver angesteuert werden, beispielsweise Autobahn A5 oder Bundesstraße B43. Die grafische Gestaltung der Wegweisermitteilungen 21 a bis 26a an der Anzeigeeinrichtung 27 ist dabei auf den jeweiligen Straßentyp angepasst. Das heißt, die Wegweisermitteilungen 21a bis 24a, die Wegweiserschildern auf der Autobahn zugeordnet sind, sind mit weißer Schrift auf blauem Hintergrund gestaltet. Die Wegweisermitteilungen 25a und 26a, die Wegweiserschildern auf der Bundesstraße zugeordnet sind, sind mit schwarzer Schrift auf gelbem Grund gestaltet.

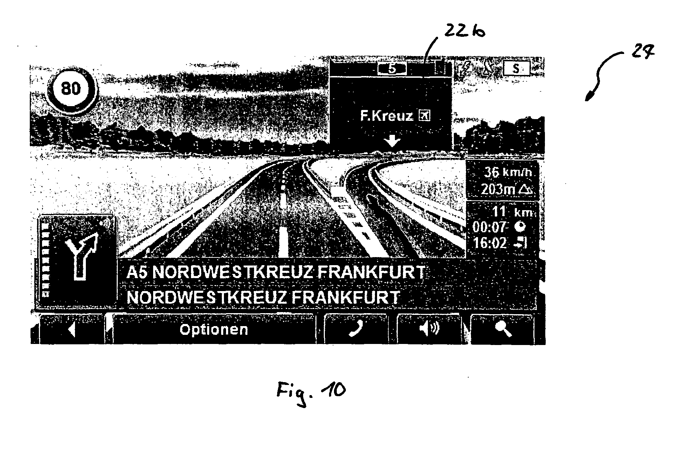

Fig. 10 zeigt die Anzeigeeinrichtung 27 bei Anzeige der Wegweisermitteilung als Graphik 22b in Reality View.

## Patentansprüche

1. Verfahren zum Betrieb eines Navigationssystems, umfassend
- eine Datenbank, in der ein geographisches Gebiet durch maschinenlesbare Daten beschrieben ist, wobei die Datenbank auch Wegweiserdatensätze (08, 09, 10, 11, 12, 13) enthält, die jeweils die Wegweiserangaben (14) von Wegweisschildern in dem geographischen Gebiet beschreiben,
- eine Routenberechnungseinheit zur Berechnung einer Route (01),
- eine Positionsermittlungseinheit, mit der die aktuelle Position bestimmt werden kann,
- zumindest eine Ausgabeeinrichtung (27), mit der zumindest ein Teil eines Wegweiserdatensatzes (08, 09, 10, 11, 12, 13) abhängig von der aktuellen Position als optische und/oder akustische Wegweisermitteilung (21, 22, 23, 24, 25, 26) ausgegeben werden kann, mit folgenden Verfahrensschritten:
a) Ermittlung von zumindest zwei Wegweiserdatensätzen (08, 09, 10, 11, 12, 13), wobei ein erster Wegweiserdatensatz die Wegweiserangaben eines auf der Route (01) liegenden ersten Wegweisschildes beschreibt, und wobei ein zweiter Wegweiserdatensatz die Wegweiserangaben eines auf der Route (01) hinter dem ersten Wegweisschild liegenden zweiten Wegweisschildes beschreibt,
b) Vergleich der ermittelten Wegweiserdatensätze (08, 09, 10, 11, 12, 13),
c) Ableitung der Wegweisermitteilung (21, 22, 23, 24, 25, 26), wobei der Inhalt der Wegweisermitteilung (21, 22, 23, 24, 25, 26) in Abhängigkeit vom Ergebnis des Vergleichs zwischen den ermittelten Wegweiserdatensätzen (08, 09, 10, 11, 12, 13) bestimmt wird,
d) optische und/oder akustische Ausgabe der Wegweisermitteilung (21, 22, 23, 24, 25, 26).

2. Verfahren nach Anspruch 1,
**dadurch gekennzeichnet,**
**dass** der erste Wegweiserdatensatz (08) dem auf der Route (01) liegenden, relativ zur aktuellen Position nächstliegenden Wegweisschild zugeordnet ist.

3. Verfahren nach Anspruch 1 oder 2,
**dadurch gekennzeichnet,**
**dass** die zur Ableitung der Wegweisermitteilung (21, 22, 23, 24, 25, 26) ausgewerteten Wegweiserdatensätze (08, 09, 10, 11, 12, 13) einer ununterbrochenen Kette von auf der Route (01) liegenden Wegweisschildern zugeordnet sind.

4. Verfahren nach einem der Ansprüche 1 bis 3,
**dadurch gekennzeichnet,**
**dass** zur Ableitung der Wegweisermitteilung (21, 22, 23, 24, 25, 26) die Wegweiserangaben (14) von zumindest zwei Wegweiserdatensätzen (08, 09, 10, 11, 12, 13), die zwei auf der Route (01) hintereinander liegenden Wegweisschildern zugeordnet sind, miteinander verglichen werden, wobei die Wegweiserangaben (14) des ersten Wegweiserdatensatzes (08, 09, 10, 11, 12, 13) ausgefiltert werden, die keine übereinstimmende Wegweiserangabe im zweiten Wegweiserdatensatz (08, 09, 10, 11, 12, 13) aufweisen.

5. Verfahren nach Anspruch 4,
**dadurch gekennzeichnet,**
**dass** die nach der Ausfilterung verbleibenden Wegweiserangaben (14) des ersten Wegweiserdatensatzes (08, 09, 10, 11, 12, 13) als Vergleichsergebnisliste zwischengespeichert werden, wobei die Vergleichsergebnisliste zur Ableitung der Wegweisermitteilung (21, 22, 23, 24, 25, 26) weiterverwendet wird.

6. Verfahren nach Anspruch 5,
**dadurch gekennzeichnet,**
**dass** die Ausfilterung von Wegweiserangaben (14) aus der Vergleichsergebnisliste des ersten Wegweiserdatensatzes (08, 09, 10, 11, 12, 13) durch Vergleich mit weiteren Wegweiserdatensätzen (08, 09, 10, 11, 12, 13), die einer ununterbrochenen Kette von auf der Route (01) liegenden Wegweisschildern zugeordnet sind, so lange fortgesetzt wird, bis keine übereinstimmenden Wegweiserangaben (14) mehr vorhanden sind und/oder bis keine weiteren Wegweiserdatensätze (08, 09, 10, 11, 12, 13) für die Route (01) vorhanden sind, wobei die Wegweiserangaben (14) aus der letzten, nicht leeren Vergleichsergebnisliste zur Ableitung der Wegweisermitteilung (21, 22, 23, 24, 25, 26) verwendet werden.

7. Verfahren nach Anspruch 6,
**dadurch gekennzeichnet,**
**dass** alle Wegweiserangaben (14) aus der letzten, nicht leeren Vergleichsergebnisliste als Wegweisermitteilung (21, 22, 23, 24, 25, 26) ausgegeben werden.

8. Verfahren nach Anspruch 6,
**dadurch gekennzeichnet,**
**dass** genau eine, insbesondere die jeweils erste, Wegweiserangabe (14) aus der letzten, nicht leeren Vergleichsergebnisliste als Wegweisermitteilung (21, 22, 23, 24, 25, 26) ausgegeben wird.

9. Verfahren nach einem der Ansprüche 4 bis 8,
**dadurch gekennzeichnet,**
**dass** nach Entleerung der Vergleichsergebnisliste eine neue Vergleichsergebnisliste durch Vergleich weiterer Wegweiserdatensätze (08, 09, 10, 11, 12, 13) angelegt wird.

10. Verfahren nach einem der Ansprüche 1 bis 9,
**dadurch gekennzeichnet,**
**dass** Wegweiserdatensätze (08, 09, 10, 11, 12, 13) überprüft werden, ob der Zielort der Route (01) als Wegweiserangabe (14) enthalten ist, wobei dann der Zielort als Wegweisermitteilung ausgegeben wird.

11. Verfahren nach einem der Ansprüche 1 bis 10,
**dadurch gekennzeichnet,**
**dass** zwei Wegweiserangaben (14) als übereinstimmend klassifiziert werden, wenn beide Wegweiserangaben(14)
a) zumindest ein identisches Wort und/oder
b) zumindest einen identischen Wortbestandteil und/oder
c) zumindest eine identische Wortgruppe und/oder
d) zumindest ein identisches Graphiksymbol enthalten.

12. Verfahren nach einem der Ansprüche 1 bis 11,
**dadurch gekennzeichnet,**
**dass** Hilfsworte, insbesondere Präpositionen, beim Vergleich der Wegweiserangaben (14) zur Feststellung von Übereinstimmungen unberücksichtigt bleiben.

13. Verfahren nach einem der Ansprüche 1 bis 10,
**dadurch gekennzeichnet,**
**dass** zwei Wegweiserdatensätze als übereinstimmend klassifiziert werden, wenn beide Wegweiserdatensätze übereinstimmende Metadaten enthalten, wobei die Metadaten aus den Wegweiserangaben abgeleitet sind.

14. Verfahren nach Anspruch 13,
**dadurch gekennzeichnet,**
**dass** beim Vergleich der Metadaten zweier Wegweiserdatensätze die in den Wegweiserdatensätzen gespeicherte phonetische Transkription der Wegweiserangaben verglichen wird.

15. Verfahren nach einem der Ansprüche 1 bis 14,
**dadurch gekennzeichnet,**
**dass** die Ableitung aller entlang der Route (01) auszugebenden Wegweisermitteilungen (21, 22, 23, 24, 25, 26) vor Start der Routenführung erfolgt, wobei die einzelnen Wegweisermitteilungen (21, 22, 23, 24, 25, 26) bis zu ihrer positionsabhängigen Ausgabe zwischengespeichert werden.

16. Verfahren nach einem der Ansprüche 1 bis 14,
**dadurch gekennzeichnet,**
**dass** die Ableitung einzelner Wegweisermitteilungen (21, 22, 23, 24, 25, 26) positionsabhängig, insbesondere zu einzelnen Manöveranweisungen, erfolgt.

17. Verfahren nach einem der Ansprüche 1 bis 16,
**dadurch gekennzeichnet,**
**dass** die graphische Gestaltung der positionsabhängig ausgegebenen Wegweisermitteilung (21a, 22a, 23a, 24a, 25a, 26a), insbesondere die Farbgebung der Wegweisermitteilung(21a, 22a, 23a, 24a, 25a, 26a), der graphische Gestaltung des an der aktuellen Position vorhandenen Wegweisschildes entspricht.
